# EUROPEAN PATENT SPECIFICATION

(11) **EP 1 851 020 B1**
(45) Date of publication and mention of the grant of the patent: **20.07.2011**
(21) Application number: 06727446.4
(22) Date of filing: 15.02.2006
(51) Int. Cl.: B27M 3/06, B23K 26/00, B32B 21/04, E04F 15/16

(54) **METHOD FOR MANUFACTURING FLOOR PANELS, AS WELL AS FLOOR PANEL OBTAINED BY MEANS OF SUCH METHOD**
VERFAHREN ZUR HERSTELLUNG VON BODENPLATTEN UND AUF DIESE WEISE HERGESTELLTE BODENPLATTE
PROCEDE DE FABRICATION DE PANNEAUX DE PLANCHER ET PANNEAUX DE PLANCHER OBTENUS SELON LEDIT PROCEDE

(30) Priority: 23.02.2005 BE 200500096; 26.04.2005 US 674718 P
(43) Date of publication of application: 07.11.2007
(60) Divisional application: 11000634.3
(73) Proprietor: Flooring Industries Ltd., Dublin 1 (IE)
(72) Inventor: BROUCKAERT, Dries, B-8560 Gullegem (BE); VANDEVOORDE, Christian, B-9870 Zulte (BE)
(74) Representative: Donné, Eddy
(86) International application number: PCT/IB2006/000822
(87) International publication number: WO 2006/090287

(56) References cited:
- WO-A-99/20442
- WO-A-2004/050359
- AU-A- 5 896 186
- DE-U1- 9 402 681
- US-A- 4 943 700
- US-A1- 2002 179 582
- US-A1- 2004 172 904
- US-B1- 6 393 687
- US-B1- 6 647 690
- WIESNER F: "LASERINTEGRATION IN EIN CNC-DREH-FRASZENTRUM" F & M. FEINWERKTECHNIK MIKROTECHNIK MESSTECHNIK, HANSER, MUNCHEN, DE, vol. 102, no. 9, 1 September 1994 (1994-09-01), pages 390-392, XP000465916 ISSN: 0944-1018
- BARNEKOV V G ET AL: "FACTORS INFLUENCING LASER CUTTING OF WOOD" FOREST PRODUCTS JOURNAL, MADOSON, WI, US, vol. 36, no. 1, 1986, pages 55-58, XP000198770 ISSN: 0015-7473

## Description

This invention relates to a method for manufacturing floor panels, as well as to a floor panel obtained by means of such method.

More particularly, the invention relates to a method for manufacturing floor panels, of the type comprising a top layer on the basis of synthetic material, and in particular to floor panels mostly denominated laminate panels.

It is known that such floor panels can be of different construction.

Mostly, such laminate panels comprise at least a core, a decor, as well as a top layer on the basis of synthetic material. The top layer mostly consists of a number of carrier sheets, for example, of paper, which are soaked in resin, for example, a melamine resin, such as melamine formaldehyde. In such case, it is common to perform the laminate as a so-called "DPL" (Direct Pressure Laminate), whereby the top layer is pressed directly upon the core, or so-called "HPL" (High Pressure Laminate"), whereby the top layer as such is obtained by means of a pressure treatment before providing the top layer as a whole on the core. Also, other possibilities for forming such top layer are possible, for example, by making use of films, by applying a substance to be hardened, such as a varnish or the like, or in any other manner. The decor mostly is printed, either directly on the core, with the possible intermediary of a primer, or on one or more of the aforementioned carrier sheets or on the aforementioned film.

It is also known that such floor panels can be applied for forming a floating floor covering. Hereby, these floor panels, during installation, are coupled at their edges, either by means of a classical tongue and groove connection, whereby these possibly are glued into each other, or by means of mechanical coupling parts providing for a mutual coupling of the floor panels in horizontal as well as in vertical directions, for example, as described in the international patent application WO 97/47834. This document describes how the respective coupling parts can be formed while moving the floor panel over rotating mechanical cutting tools. This method is also called continuous milling.

From the international patent application WO 01/96688, it is also known to remove a material portion from the upper edge of such laminate panels, such that the resulting surface forms, for example, a chamfer, whether or not then being covered by a decorative layer. US 6,647,690 B1, on which the preamble of claim 1 is based, discloses a method for manufacturing floor panels, of the type, which comprise a to layer on the basis of synthetic material and which, at least at two opposite sides, has profiled edge areas that comprise at least coupling parts, wherein, for manufacturing the floor panels, it is started from a board-shaped material. The floor panels are partially formed by means of a laser treatment. In this case the laser treatment is used for realizing part of the profile of the coupling means.

The present invention aims at a method for manufacturing floor panels that allows to obtain a better and/or less expensive and/or more flexible and/or more reliable good finish. Also, the invention aims at a floor panel having such finish.

To this aim, the invention relates to a method for manufacturing floor panels of the type, which comprises a top layer on the basis of synthetic material and which, at least at two opposite sides, has profiled edge areas that comprise at least coupling parts, wherein, for manufacturing the floor panels, one starts from a board-shaped material and wherein the floor panels are formed at least partially by means of a laser treatment, with the characteristic that said laser treatment is applied for removing a material portion from the to layer and wherein by means of said laser treatment at least a portion of the final surface of the profiled edge area is established.

Applying a laser treatment when forming floor panels in most cases, however, not always, means the elimination of at least one traditional treatment, for example, a treatment with a rotating mechanical cutting tool, such as a milling cutter. A laser treatment requires less maintenance than, for example, the maintenance required by the wear of a milling cutter. Moreover, by means of a laser beam a thin and/or smooth cut is easier to obtain than, for example, with a saw or a milling cutter.

Preferably, for forming the floor panels of the board-shaped material, use shall be made of said laser treatment as well as of at least one or more other treatments, said treatments being performed by means of one or more mechanical cutting tools, for example, rotating mechanical cutting tools, such as milling cutters or saws.

Said laser treatment can be performed on a board-shaped material, of which during or after this treatment floor panels are obtained, as well as to a board-shaped material having already the desired or almost the desired dimensions of the respective floor panels.

According to the invention, the laser treatment shall at least be applied for removing a material portion from the top layer of the floor panel. In a preferred form of embodiment, hereby the laser treatment and the aforementioned other treatments are combined such that, by applying the laser treatment, the contact between, on the one hand, the cutting tool, cutting tools, respectively, and, on the other hand, the aforementioned top layer is reduced, more particularly is reduced in respect to the contact usually existing between such cutting tools and the top layer, when such floor panels were to be manufactured entirely by means of mechanical cutting treatments of the board-shaped material. Reducing this contact means a global reduction of the wear and a prolongation of the service life of the respective cutting tool, cutting tools, respectively. Limiting the mechanical contact with the top layer also effects a better and more reliable quality of the floor panel. This advantage is particularly present in floor panels with a rather brittle top layer, which breaks under the influence of mechanical contact, such as, for example, a thermosetting top layer on the basis of melamine formaldehyde. More particularly, this advantage manifests itself in particular in floor panels with top layers in which a wear-resistant material, for example, corundum, is incorporated, as such material causes a high wear and tear with cutting tools and this disadvantage can be considerably reduced by using a laser treatment.

In a particular preferred form of embodiment, by means of the laser treatment, material is removed transversally through the top layer, over the entire thickness thereof, preferably in the form of a cut extending through the top layer. Hereby, it is advantageous to combine the laser treatment and said other treatments such that, by applying the laser treatment, the contact between the mechanical cutting tools and said top layer is entirely excluded.

According to the invention, the aforementioned profiled edge area of the floor panels is formed at least partially by the laser treatment. Hereby at least a portion of the final surface of the profiled edge area is realized by means of the laser treatment. It is not excluded to provide this profiled edge area with a chamfer, whereby the final surface of this chamfer is formed at least partially by means of the aforementioned laser treatment.

Preferably, the final surface of the profiled edge area is also formed, at least partially, by the aforementioned other treatments. Hereby, then, for example, use shall be made of mechanical tools, for example, rotating milling tools and/or broaches. The use of mechanical tools for forming the profiled edge areas in floor panels, which at least comprise coupling parts, as such is known, for example, from WO 97/47834. According to the present invention, however, as explained above, by applying these tools in combination with a laser treatment, the contact between these tools and the top layer, however, can be limited or even excluded, which limits the wear and tear of the mechanical tools and may effect a more qualitative finishing.

It is known, when providing the profiled edge area and the coupling parts, to move the floor panels along mechanical tools, for example, by applying the so-called continuous milling. In such configuration, within the scope of the present invention, it is recommended to fixedly attach the laser lens and to move the floor panels also along the laser beam. However, it is not excluded to install the laser lens movable and/or to keep the panel still. Said laser treatment preferably shall take place on a line, and the possibly removed material portion preferably shall be deeper than 0.2 mm, and even better deeper than 1 mm, such that the aforementioned material portion in depth direction comprises a large part of the top layer and preferably continues to below the top layer.

Surprisingly, the inventors have found that, when forming said line, speeds can be reached that are comparable to the speeds reached in continuous milling, for example, speeds of more than 100 m/min, or even better more than 150 m/min. Speeds of more than 200 m/min are also not excluded. Speeds of more than 100 m/min allow to install such laser treatment in line with, for example, a milling process without reducing the production speed.

When, by means of said laser treatment, the final upper edge of the floor panel is formed, at least for a portion of the circumference thereof, then a method fulfilling the characteristics of the invention will effect an exceptionally high-quality edge finishing of the floor panel. Presumably, this is due to the fact that, when performing such laser treatment, the top layer, at least at the height of said upper edge, can reach a temperature at which the synthetic material in the top layer becomes plastic, such that, after performing the laser treatment, for example, when the top layer cools off, a smooth upper edge is formed.

In a preferred form of embodiment, the final upper edge formed by means of the laser treatment is performed with an undercut. This can be realized in any manner, for example, by inclining the laser beam, adjusting and/or positioning the focus of the laser treatment in respect to the workpiece, or similar.

As such, for the manufacture of floor panels, it is known to start from a board-shaped material upon which said top layer is present and whereby a top layer is concerned that comprises particles of a wear-resistant material, for example, a ceramic material, such as Al₂O₃, SiC, diamond, etc. Applying a method according to the present invention for manufacturing such floor panels entails particular advantages. With a treatment that is performed at the upper side of the floor panel, it is expected that said particles are molten, vaporized or split, which effects a very high-quality treatment, in view of the fact that there are no, or almost no, projecting hard parts at the obtained surface. This is contrary to, for example, a milling process, whereby either the wear-resistant particles will be drawn out of the top layer, or the top layer around the hard particles will be removed, such that these particles form projecting hard parts on the obtained surface. In comparison with a method whereby the same material portion of the top layer is removed by means of a milling treatment, a laser treatment of a top layer with wear-resistant particles also includes a further restriction of tool wear. Moreover, this method offers a more constant quality and, thus, a more reliable treatment.

In particular, the invention preferably shall be applied for manufacturing laminate floor panels comprising a core, whether or not composed of several layers or portions, a decor, as well as said top layer of synthetic material. Preferably, the top layer of such laminate floor panel then shows one or more of the following features:
- that it consists of maximum three carrier sheets soaked in resin and pressed upon the core, amongst which a printed decor layer;
- that it is manufactured in the form of "DPL";
- that it is thinner than 0.5 mm.

Due to its small thickness, such top layer is exceptionally suitable for being subjected to laser cutting treatments.

When manufacturing floor panels, more particularly laminate floor panels, in the traditional manner by means of rotating cutting tools, the top layer often is affected, and in case of a brittle top layer, for example, of a thermosetting resin such as melamine formaldehyde, is broken, which, for example, in the case of a DPL (Direct Pressure Laminate), leads, amongst others, to a white line showing at the edge of the panels, which remains visible in an annoying manner in a floor covering consisting of several of such floor panels. Coloring the edges of such panels by means of a coloring agent in order to mask these disturbing edges is known. The present invention does not exclude that, during performing of a method according to the invention by means of the laser treatment, whether or not in combination with additional treatments, a thermal surface treatment is effected in at least a portion of the final surface of the profiled edge area. Preferably, this thermal surface treatment consists at least in a discoloration. By means of the heat development of a laser treatment and the depositing of a portion of the possibly removed material, a portion of the profiled edge area, for example, the upper edge of the floor panel, can be colored dark. This latter may also avoid that the edge of a laminate panel becomes visible in a disturbing manner and may make the coloring of the edges by means of a coloring agent redundant. Another possible surface treatment consists at least of heating the surface by means of the laser treatment, followed by smoothing the heated surface in the heated condition, in order to improve the smoothness of the surface.

According to another possible form of embodiment, the laser treatment is applied at least for heating the surface of the floor panels, or at least a portion of the surface of the floor panels, with the intention of influencing the mechanical and/or thermal and/or other features of said portion. Such heating of the surface of the floor panels may result, for example, in that a subsequent treatment of this heated and preferably still warm portion, such as a treatment with a mechanical tool or a treatment with a laser beam or other beam, can be performed more efficiently. So, for example, the wear of the mechanical tool may be restricted by this, or the energy coupling of the laser light into the surface during the possibly following laser treatment may be influenced beneficially. In the case that the floor panels relate to laminate panels with a top layer on the basis of synthetic material, such heating may lead to an at least temporary local softening of the respective top layer. This softening can be advantageously applied in particular when the top layer, apart from synthetic material, also comprises hard particles, such as aluminum oxide (Al2O3). In that case a subsequent treatment of the top layer with a mechanical tool experiences less resistance in order to remove the hard particles together with the softened synthetic material, which can lead to a significant reduction of wear for the mechanical tool and a better finishing quality of the top layer. So, for example, may the top layer be softened in order to subsequently perform a mechanical cutting treatment through the softer top layer, for example, for forming the aforementioned profiled edge areas.

As aforementioned, the laser treatment of the invention, however, results in an effective material removal from the top layer. In a board-shaped laminate material, the material portion removed by the laser treatment best continues into the core, for example, up to a depth of 0.7 to 2 mm below the upper side of the panel.

However, it is noted that, if one wants to avoid a depositing of the removed material portion on the upper side of the panel, during performing the laser treatment, a blowing effect is provided, too, in order to remove released material portions. The blowing effect can take place by means of, either, on the one hand, the cutting gas flowing from the nozzle (in English called "nozzle") preferably with a pressure of 6 bar or more, coaxially to the laser beam, or, on the other hand, an extern additional gas flow having, for example, also a pressure of 6 bar. In order to obtain an optimum removal of the released material, preferably a blowing and/or suction effect is provided, which is characterized by one or more and preferably a combination of the following features:
- that there is at least a blowing effect substantially according to a direction opposite to the direction with which the laser front moves along the board-shaped material;
- that there is at least a blowing effect substantially according to a direction situated transversally to the direction with which said laser front is moving along the board-shaped material, and at the same time directed away from the finally to be formed floor panel;
- that there is at least a suction effect transverse, and preferably substantially perpendicular, to the surface or the decorative side of the floor panel to be formed, above the already formed cut in the immediate proximity of the laser front.

It is noted that by applying a blowing and/or suction effect with the above-mentioned features, also the possible creation of nasty smells is counteracted and the deposition of nasty-smelling particles on the produced floor panels is excluded or minimized. According to a variant, instead of gas flows or in combination with a gas flow, rinsing cycles may be performed with a liquid medium, such as water, alcohol or the like. These rinsing cycles may be particularly useful for preventing the occurrence of said nasty smells.

In a particular preferred form of embodiment, one works with a laser situated at an angle in respect to the surface of the board-shaped material, whereby the arrangement at an angle is performed such that it fulfils at least one of the following and preferably a combination of the following features:
- that the surface presented to the laser treatment, in other words, the surface situated immediately in front of the laser front, and the laser beam form an angle smaller than 90°, as measured in a projection of the laser beam onto a plane situated perpendicularly to the plane of the plate-shaped material and extending according to the direction of advancement of the laser front.
- that the surface presented to the laser treatment and the laser beam form an angle between 50 and 70°, for example, 60°;
- that the surface presented to the laser treatment and the laser beam form an angle according to any of the above-defined possibilities, whereby next to the laser beam, a gas flow is supplied to the floor panel by means of the same laser head, in substantially the same direction.

Such inclination of the laser beam offers particular advantages in respect to the quality of the laser treatment. It may lead to a more efficient treatment, a qualitatively higher finish and/or less contamination by deposition of the removed material.

Applying the method according to the invention for manufacturing floor panels consisting at least partially of a material on the basis of fibers, preferably wood fibers, which are consolidated with a binding agent, such as MDF or HDF, results in a broad range of advantages. So, by means of a laser treatment, for example, surfaces without protruding fibers can be obtained. It is known that laminate floor panels often comprise a core of such material.

When performing the aforementioned treatment step according to the invention, it is possible that the binding material at the height of said edge becomes plastic and that this treatment step is followed by a treatment whereby the fibers at the height of the edge are pressed into the binding material by means of a pressing element, such that, when the binding material cools off, a smooth surface is obtained.

For performing a laser treatment according to the characteristics of the invention, a laser beam that is generated by a CO₂ laser with an output power of more than 1 kW and even better more than 2 kW or more than 4 kW, is recommended. Preferably, hereby a laser pulse frequency is applied that is higher than 10kHz. Also other laser sources, such as, for example, a Nd-YAG laser, as well as other laser pulse frequencies, are possible. In a preferred form of embodiment, one works with a short focal distance, for example, a focal distance of less than 10 cm, such that the power of the laser can be concentrated onto the top layer of the floor panel in an optimum manner. By "focal distance", the distance from the lens to the floor panel is meant. Preferably, the distance from the nozzle to the floor panel is kept small, too, for example, less than 1.5 mm, or even better less than 1 mm.

Further is noted that various precautions can be taken in order to promote the coupling of the laser energy in the floor panel. So, for example, in the case that the laser treatment is applied for treating the top layer of the floor panel, components can be present in the synthetic material or the resin that promote such coupling-in of the laser energy. So, for example, soot particles mixed into the resin may have a very beneficial effect. Also the application of hard particles other than Al203, such as TiC, Tip2, diamond, BC4 is recommended, as these have a more beneficial effect onto the coupling-in of the laser light in the synthetic material of the top layer. Agents that preferably are omitted as constituents and/or contaminants of the top layer are, for example, bauxite and barium sulfate.

The laser source preferably is erected external to the working area of the laser beam, for example, external to a machine in which both the respective laser treatment and another treatment step in the method are performed. In such a configuration, the laser beam is lead towards the lens over a stabilized optical path, either by mirrors, as can be the case with a CO₂ laser, for example, or by a glass fiber, as can be the case with a Nd-YAG laser.

In a preferred form of embodiment, the laser beam, on its optical path, can be split into several beams by means of a so-called "beam splitter". Splitting a beam originating from one laser source into at least two laser beams is advantageous in the case of a method for manufacturing floor panels, in view of the fact that in this manner two edges can be treated at the same time, whereas the space taken by laser sources, for example, by CO₂ laser sources, remains limited. Preferably, the two aforementioned laser beams treat two opposite sides of the floor panel. It is clear that in case a laser beam is split into several beams, the required power of the laser source equals the sum of the required power of the beams, plus the losses that occur as a result of the splitting.

A discoloration of an edge of a floor panel, such as explained in reference to the invention, can also be obtained by other heat sources than a laser beam. It is clear that such method, the discoloration being obtained by whichever heat source, provides for that the appearance of said disturbing white line is entirely or partially avoided.

Preferably, such method is applied as a post-treatment for coloring light-colored edges that are obtained as a result of a cutting treatment through the top layer of the laminate panels.

The inventors have found that setting the power of the heat source, e.g. of a laser beam, leads to setting the color of the treated edge. So, for example, it is possible to vary the obtained color between light brown and dark brown or black. These colors are particularly interesting for the post-treatment of floor panels imitating dark species of wood or stone. Such dark decors are present, for example, in imitations of wood species such as dark oak, wengé and the like, or in floor panels having a shadow effect at the edge in their decor, as can be the case, for example, when creating an optical illusion of an impression next to the edge, such as a chamfer, by means of the decor. In fact, with panels with such dark decors, the aforementioned white line will appear most disturbing. Preferably, in such method, use is made of a laser beam having an adjustable power between 20 and 200 W, and even better between 50 and 100 W. Obtaining said discoloration presumably occurs by means of one or more of the following possibilities:
- partially burning the top layer,
- partially burning the core,
- partially burning the decor,
- depositing soot particles as a result of burning either the top layer, or the core, or the decor,
- starting a chemical reaction in the top layer or the core.

According to a deviating variant of such method, it is also possible that a chamfer provided at the upper edge of the floor panel, or another surface obtained by removing a material portion at the upper edge of the floor panel, is provided with a color by means of a heat source. In a preferred form of embodiment of such method, the coloration takes place simultaneously with the application of said surface. This can be, for example, by means of a laser beam. It is noted that this deviating variant is preferable in particular with small surfaces, for example, with a dimension in one direction that is smaller than 1 mm.

It is noted that the present invention also relates to a floor panel with the characteristic that, for the manufacture thereof, a method according to the invention is applied.

Further characteristics of the aforementioned methods and floor panels will appear from the following described examples and the appended claims.

With the intention of better showing the characteristics of the invention, hereafter, as an example without any limitative character, several preferred forms of embodiment are described, with reference to the accompanying drawings, wherein:
Figure 1, in a highly schematized manner, represents several treatment steps in a method for manufacturing floor panels according to the present invention;
figures 2 to 5, at a larger scale, represent cross-sections according to lines II-II, III-III, IV-IV and V-V, respectively, in figure 1;
figure 6 shows a variant of the portion indicated by F6 in figure 2;
figure 7 represents a variant in a cross-section according to line VII-VII in figure 1;
figures 8 to 10 represent more variants;
figures 11 to 16 represent cross-sections similar to those of figures 9 and 10, however, for further variants, wherein the embodiment of figures 14 to 16 do not form part of the claimed invention;
figures 17 and 18 represent another variant;
figures 19 and 20, at a smaller scale, represent another method according to the invention;
figure 21 represents a highly enlarged and schematized representation of the area indicated by F18 in figure 5;
figure 22 represents another method ;
figure 23 represents a cross-section similar to that of figure 21, however, for a variant;
figures 24 to 26 schematically represent still other variants not forming part of the claimed invention;
figures 27 to 30 illustrate another two variants of methods, wherein figures 28 to 30, at a larger scale, represent the portion indicated by F28 in figure 27;
figure 31 represents still another preferred form of embodiment of a method according to the invention.

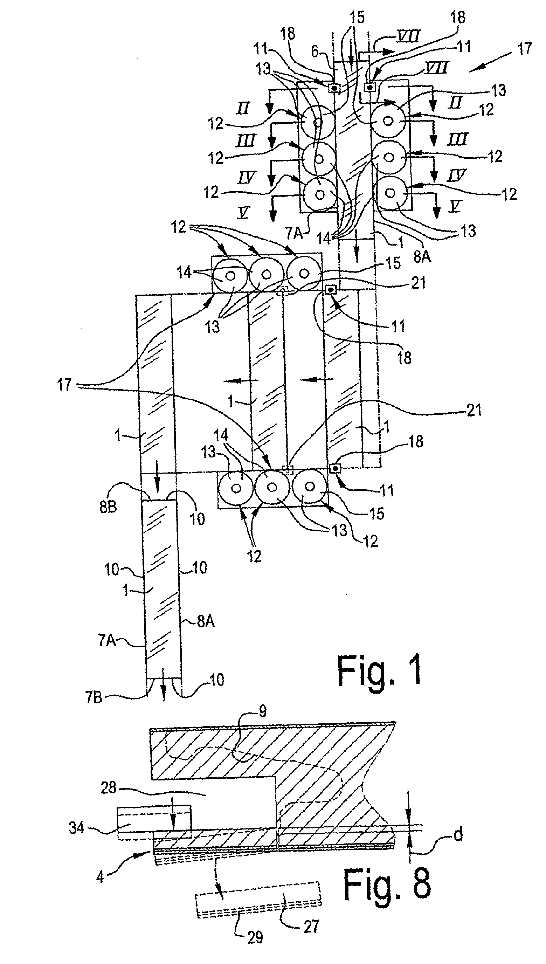

Figures 1 to 5 represent a method for manufacturing floor panels 1. More particularly, this relates to floor panels, 1, in particular laminate panels, of the type comprising a core 2, a decor 3, as well as a top layer 4 on the basis of synthetic material 5. For manufacturing the floor panels 1, one starts from a board-shaped material, in this case, board-shaped laminate material 6. In the represented example, this board-shaped laminate material 6 already has approximately the desired dimensions of one floor panel 1. After forming the floor panels 1 from the board-shaped material, the floor panels 1 have profiled edge portions 9, which at least comprise coupling parts 10, provided at least at two opposite sides, and in this case at all four sides, namely the longitudinal sides 7A-8A and the short sides 7B-8B. Hereby, the floor panels 1 are formed at least partially by means of a laser treatment 11 from the board-shaped material, in this case, thus, the laminate material 6. In this case, the floor panel 1 comprises profiled edge portions 9 at both pairs of sides and the laser treatment 11 is performed at each side.

For forming the floor panels 1, in the represented form of embodiment, apart from the aforementioned laser treatment 11, furthermore use is made of one or more other, preferably machining treatments 12, by means of one or more cutting tools 13, such as, for example, rotating or translating milling cutters 14, one or more saws 15 or the like, as described in the following. More particularly, in the example of figure 1 at each side 7A-8A-7B-8B one treatment step is performed by means of a saw 15 and two treatment steps are performed by means of a rotating milling cutter 14. Hereby, the so-called continuous milling is concerned. As represented, the floor panel 1 hereby first is moved with its longitudinal sides 7A-8A along the laser beams 16 and the rotating milling cutters 13 in order to form the respective edge areas 9, after which the floor panel 1 is subjected to similar treatments at its short sides 7B-8B.

In order to avoid that each laser beam 16 is operating unnecessarily, the respective laser performing the laser treatment 11 can be switched on and off by means of a signal detecting the presence or absence of a floor panel 1. Possibly, also a so-called "beam dumper" can be provided, which neutralizes such laser beam 16 when no floor panel 1 is present and the laser beam 16 unexpectedly would remain beaming.

The aforementioned other treatments 12, in this case, the three successive machining treatments at two opposite sides 7-8 of the floor panel 1, preferably are performed in one and the same machine 17. Preferably, the laser treatment 11 also shall be performed in this machine 17, although it is not excluded that particular advantages are obtained when the laser treatment 11, as represented in figure 1 for the treatment of the short sides 7B-8B of the floor panel 1, takes place outside machine 17 with which said other treatments 12 are performed. When mounting the laser head 18 in a conventional processing machine, it is recommended to protect it as good as possible from dust created as a result of said other treatment 12, which, of course, is less critical when the laser head is situated outside machine 17. By "laser head 18", that part of the laser installation is intended that comprises the lens 19 and the so-called nozzle 20. Remaining parts of the laser installation, such as, for example, the laser source and the optical path, are not represented in the figures, however, preferably are situated external to machine 17.

It is clear that the sequence of the treatments, such as, amongst others, those represented in figure 1, can be varied at random and that, for example, first one or more other treatments 12 can be performed at the board-shaped laminate material 6 before performing the laser treatment 11, such as, for example, illustrated by the alternative arrangement 21 of the laser represented in dashed line in figure 1. Also, the laser treatment 11 can be followed by one or more other or similar treatments. It is also clear that it is possible to first treat the short sides 7B-8B and thereafter the longitudinal sides 7A-8A of the floor panel 1. Also the simultaneous or alternating performance of treatments at the longitudinal and short sides is not excluded, and one can also restrict oneself to processing only the longitudinal, or only the short sides, or only one side. Also, several laser treatments can be performed at one side, whether or not realizing a common cut.

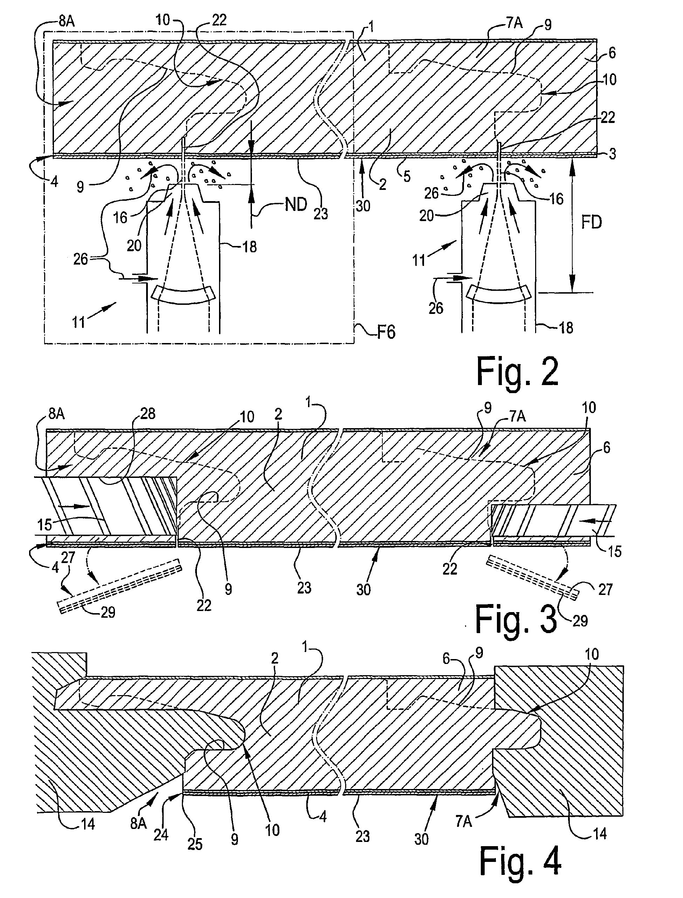

As represented in figure 2, the laser treatment 11 preferably is applied at two opposite sides 7A-8A, and even better simultaneously at these two sides. Both laser beams applied thereby then preferably originate from one laser source, the beam of which is split by means of a so-called "beam splitter", which is known as such. It is clear that also more than two laser beams can be applied at the same time, or that more than two sides can be simultaneously treated, whether or not by laser beams originating from one and the same laser source.

The laser treatment 11 represented in figure 2 is applied at least for removing a material portion 22 from the top layer 4 and more particularly for forming a cut therein. Here, the treatment is also applied for removing a material portion 22 from the core 2, in such a manner that the laser treatment 11 in this case also defines at least the profiled edge area finally to be realized. In the represented example, the laser treatment 11 applies a cut in the decorative side 23 of the floor panels 1, whereby a portion of the obtained surface 24 forms the upper edge 25 of the floor panels 1.

It is noted that it is recommended to keep the distance FD between the laser lens and the floor panel 1, the so-called focal distance, small, for example, smaller than 10 cm. In this manner, the laser energy is concentrated in a small area, such that substantially solely the top layer 4 and possibly the core 2 directly beneath the top layer 4 are removed. Maintaining a short focal distance guarantees an energy-efficient treatment of the top layer 4 of the floor panel 1.

The distance ND ("nozzle distance") of the nozzle 20 to the floor panel 1 is in the order of magnitude of 1 mm. Minor deviations that may manifest themselves in the distance ND have only a small impact on the efficiency in general or the depth of such laser treatment 11 in particular. So, for example, the typical deviations in the order of magnitude of 0.05 mm as a result of transporting the floor panels 1 along the laser beam 16 will have no or almost no influence.

It is noted that, at least in the represented examples, the floor panels 1 are processed with the decorative side 23 downward. It is clear that within the scope of the invention, also other orientations of the floor panels 1 and the pertaining treatments are possible. It is clear that the floor panels, during processing, are guided in a suitable manner. Guiding techniques are known as such and thus are not set forth in greater detail.

Further is noted that during the performance of a treatment step in which a laser is applied, preferably a cutting gas 26 is used, for example, compressed air, nitrogen or the like, which, by the nozzle 20, is supplied coaxially with the laser beam 16. The function of such cutting gas 26 can be a double one. Firstly, this gas cools the lens 19; secondly, it can blow away a portion of the possibly removed material of the floor panel 1. Synergetic effects between the cutting gas 26 and the laser treatment 11, by which the efficiency of the laser treatment 11 increases, are not excluded.

In the represented arrangement, it is recommended to pay particular attention to keeping the laser lens 19 free of dust or any other dirt. This is possible by providing, for example, a continuous air stream above the laser lens, such that the chance that an incident dust particle remains on the laser lens is minimum. Such dust particle can lead to burning-in and increases the risk of the lens 19 bursting. It is also possible to build a screen around the entire laser apparatus, out of which the laser beam 16 can be guided by means of a window. In the case of a CO₂ laser beam, such window may consist, for example, of ZnSe. In the case of a Nd-YAG laser, the window may consist of glass or quartz. In connection therewith, it is also noted that a so-called "fiber laser" can be applied in such dust-rich environment in an advantageous manner. Namely, such lasers can be built in the same power range as a CO₂ laser, however, offer a larger incorporation flexibility for the integration thereof in a machine 17. Nd-YAG and fiber lasers in particular will be applied there, where the material portion 22 to be removed does not contain any organic material.

As represented in figures 3 to 5, the aforementioned laser treatment 11 and the subsequent aforementioned other treatments 12, in this case the aforementioned three machining treatments, are combined such that by applying the laser treatment 11, the contact between the cutting tools and the aforementioned top layer 4 is reduced, or, as in this example, is avoided.

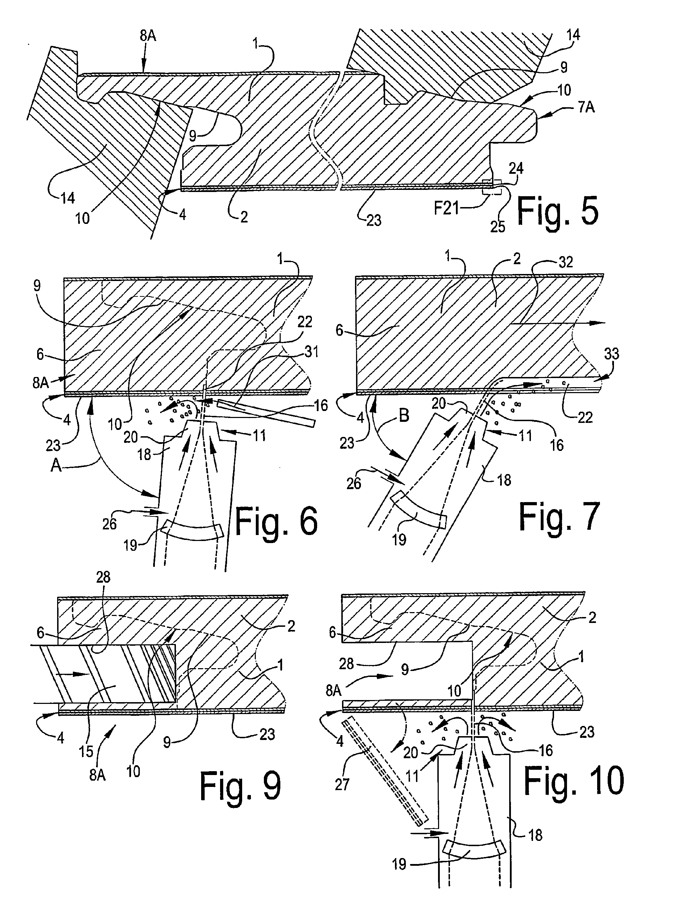

To this aim, as shown in figure 3, in a treatment following the laser treatment 11, a material portion 27 can be removed, by means of a saw cut 28, up into the aforementioned cut, such that the surplus portion 29 of the top layer 4, and possibly a portion of the core 2 beneath this top layer 4, is separated from the floor panel 1 and thus the contact between cutting tools in subsequent treatments and the top layer 4 is limited and preferably even is avoided. Figures 4 and 5 show how the edge regions 9 of the floor panels 1 thus can be formed further, for example, by means of rotating milling tools.

Figure 6 shows that in a preferred form of embodiment, the laser beam 16 is incident under an angle A < 90°, preferably under an angle A=87° up to 89°, onto the upper side 30 of the floor panel 1. In this manner, the laser treatment 11 creates an inwardly inclined edge at the upper edge 25 of the panels, whereby a good adjoining among adjacent floor panels 1 in a floor covering can be obtained. Figure 6 also represents an additional extern gas flow 31, which is applied approximately perpendicular to the laser beam 16, directed away from the floor panel 1 to be formed, in such a manner that a possible deposition is blown away from the panel.

Figure 7 represents a particularly preferred form of embodiment of the method according to the invention. Hereby, the laser beam 16 is directed considerably inclined in respect to the direction of movement 32 of the floor panels 1, such in a direction as represented and such as defined in the claims. Preferably, the laser beam 16 forms an angle B < 80°, and even better an angle B in the order of magnitude of 60°, with the upper side 30 of the floor panel 1. Surprisingly, the inventors have found that such inclination minimizes a potential deposition of the removed material, whereas the efficiency and quality of the treatment remains acceptable. Presumably, the first is due to the fact that the cutting gas 26 blows away the removed material along the already formed cutting line 33. It is noted that the invention does not exclude that the laser beam 16 also assumes other angles in respect to the floor panel 1, for example, an angle B > 90°.

Preferably, the forms of embodiment of figure 6 and figure 7 shall be combined in order to thereby obtain an optimum safeguarding against deposition on the floor panel 1 and to obtain a good adjoining of the floor panels 1. It is evident that the aforementioned extra gas flow can be applied in all forms of embodiment of the invention.

Figure 8 shows a variant of the method according to the invention, whereby first a laser treatment 11 and a saw cut 28 are performed, as described herein above by means of figures 2 and 3, however, such that the saw cut 28 does not reach up into the cut of the laser beam 16, and therefore the surplus portion of the top layer 4 will not be separated automatically. However, the saw cut 28 is performed such that the mutual distance d between this saw cut 28 and the cut provided by means of the laser beam 16 allows to break off the surplus portion 29 of the top layer 4 by means of a pressure element. In case that the method is applied to a floor panel 1, the core 2 of which substantially consists of a material on the basis of fibers, such as, for example, MDF or HDF, it is preferred that the distance d in most cases is restricted to 0.7 mm. This pressure element simply can consist of a guide 34 varying its height in longitudinal direction, which pushes away the surplus portion of the top layer 4 and effects the breaking off of this portion of the core 2 of the floor panel 1.

Figures 9 and 10 represent a variant of a method according to the invention. Hereby, first a saw cut 28 is provided in a side of the floor panel 1, and thereafter, by means of a laser treatment 11, a cut 22 is performed up into said saw cut 28, such that in this case, too, the surplus portion of the top layer 4 is released, for example, automatically, or can easily be pushed away, as explained herein above with reference to figure 8. After these treatment steps, the profiled edge areas 9 can be formed further, for example, as represented in figures 4 and 5, such that contact between the possible cutting tools and the top layer 4 is limited or avoided.

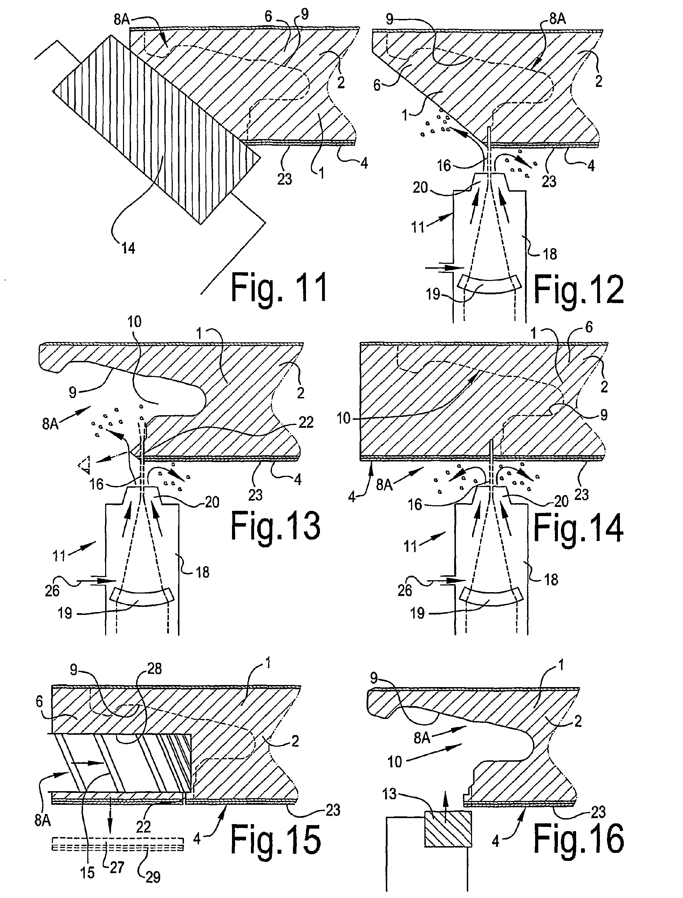

Figures 11 and 12 show a variant, whereby the surplus portion of the top layer 4 first, preferably to a major part, is removed by means of, for example, a rough and, due to its simple straight shape, easy to grind milling cutter 14, after which a laser treatment 11 is performed that shapes the upper edge 25 of the panel. After both treatments, other treatments, for example, treatments as represented in figures 4 and 5, further shape the profiled edge area. During further shaping the profiled edge area, the contact between the cutting tools and the top layer 4 shall be limited, or even avoided.

As figure 13 shows, it is not excluded that the laser treatment 11 shaping the upper edge 25 of the floor panel 1 is performed after forming the coupling parts 10.

Figures 14 to 16 show another variant of the method of figure 1, wherein this method is illustrative of the invention, but not belonging thereto. Hereby, the surplus portion 29 of the top layer 4 is only to a major part removed by providing, for example, successively a cut 22 in the top layer 4 by means of a laser treatment 11 and removing a material portion 22, for example, by means of a saw 15, up into the aforementioned cut. Hereafter then preferably treatments follow analogous to those represented in figures 4 and 5. It is noted that such saw in all described cases also may be a milling cutter or another tool. The upper edge 25 of the floor panel 1 then preferably can be formed in the last treatment step, for example, also by a machining treatment, which then, however, will come into contact with the top layer 4. The possibly applied cutting tool 13 during forming of the upper edge 25 of the panel preferably shall consist of polycrystalline diamond (so-called "PKD"), and still better of mono-crystalline diamond (so-called "MKD"). Also, cutting tools can be applied, the cutting edge of which is coated with a hard layer, such a chemically vapor-deposited diamond coating (in English known as "CVD tools" or "Chemical Vapor Deposition Tools").

A method as represented in figures 14 to 16 can be applied, for example, when the upper edge 25 of the floor panel 1 is formed by a chamfer, whereby this chamfer is entirely formed by a cutting tool 13.

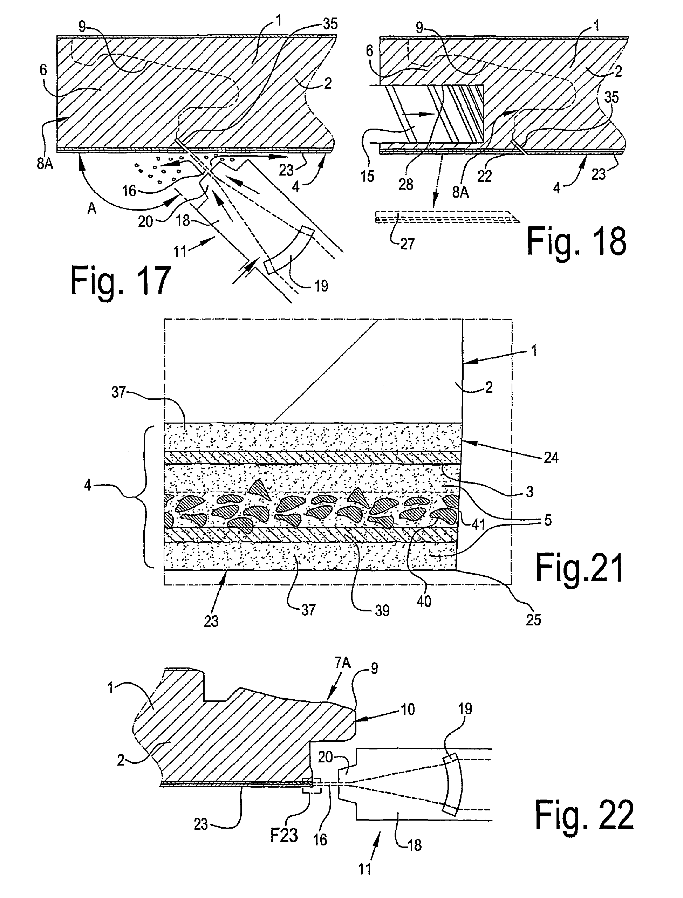

Figures 17 and 18 illustrate a method whereby the aforementioned profiled edge area comprises such chamfer 36 that is formed at least partially by the aforementioned laser treatment 11. When performing such treatment, the laser beam 16 will meet the floor panel 1 in an inclined manner, namely at an angle A > 90°, and still better at an angle A in the order of magnitude of 135°. As represented in figure 18, subsequently thereto also a saw cut 28 can be performed similar to the one represented in figure 3, such that the surplus portion of the top layer 4 is removed and that during the aforementioned other treatments 12 no, or only a limited, contact with the top layer 4 is made. Also, the laser treatment can be applied exclusively for forming the chamfer, or for a portion thereof, whereas all other material is milled away, whether or not by means of milling treatments through the top layer, whereby the laser then only has the purpose of forming the surface of the chamfer.

As illustrated in figures 1 to 13 and 17 and 18, various variants of a method according to the invention are possible. It is clear that within the scope of the invention, various treatment steps can be combined to a method for forming a floor panel 1 that entails one or more of the above-mentioned advantages. Also, the mutual sequence of the various treatment steps can be changed at random, or laser beams can be applied in several treatment steps.

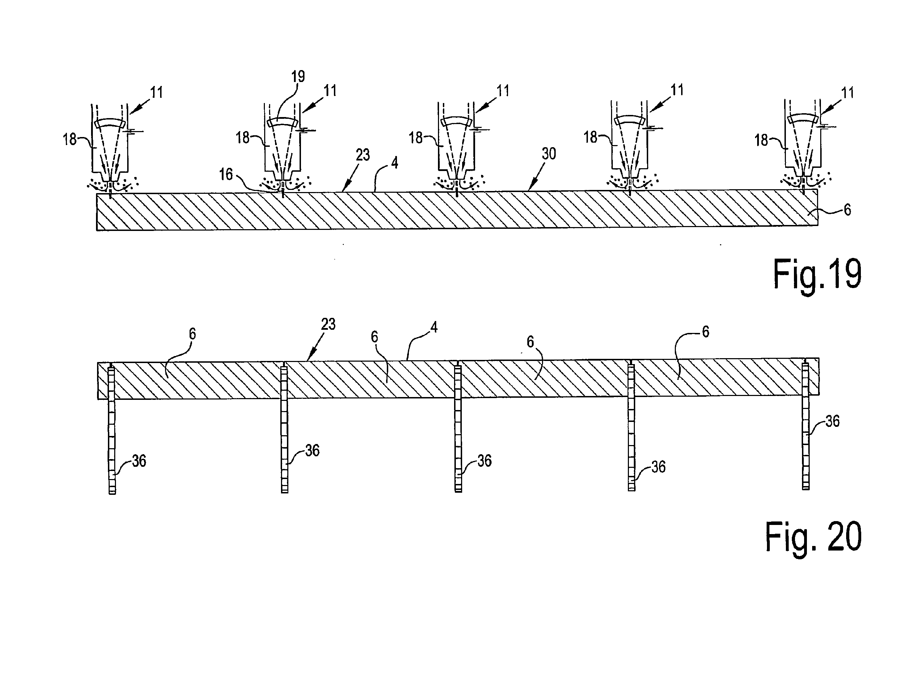

Figures 19 and 20 show a variant of a method according to the invention. Contrary to the examples shown in figures 1 to 18, the laser treatment 11 of figures 19 and 20 is performed at board-shaped laminate material 6, from which during or after the laser treatment 11 several floor panels 1 are obtained. In this case, material portions are removed from the top layer 4 by means of several laser beams, and preferably those removed material portions continue up into the core 2 of the board-shaped laminate material 6. The other treatment 12, for example, a saw treatment as represented by saws 36, following after said laser treatment 11, can, without contacting the top layer 4, divide the board-shaped laminate material 6, for example, into smaller pieces of board-shaped laminate material 6 having approximately the desired dimensions of a floor panel 1. These smaller pieces then can be subjected to a method as represented in figures 1 to 13 or 17 to 18.

Figure 21 represents, highly enlarged, the top layer 4 of a floor panel 1. This top layer 4 is situated on top of the core 2 of the floor panel 1 and consists of two carrier sheets soaked in resin 37, of which one carrier sheet 38 carries a printed decor 3 representing, for example, a wood pattern or a stone pattern, and forms the decor layer. The decor layer is covered by a so-called overlay, which consists of a transparent carrier sheet 39 also soaked in resin. The represented top layer 4 also comprises particles 40 consisting of a wear-resistant, preferably ceramic, material, such as Al₂O₃. The particles 40 are represented at the bottom side of the overlay, however, it is clear that they can be situated everywhere in the top layer 4, however, preferably above the decor 3. By the laser treatment 11, at the top layer 4 a smooth surface 41 at the cut can be obtained, as on the obtained surface, as represented, no or almost no projecting hard parts are present. By the laser treatment, the hard particles namely are molten, vaporized or split by a thermal shock related to the laser treatment, contrary to another treatment 12, as, for example, milling, whereby the particles are drawn in pieces out of the material and thus a rather rough cut is created.

The core 2 of the floor panel 1 preferably consists of a material on the basis of fibers, preferably wood fibers, which are consolidated by a binding material, such as MDF or HDF. Preferably, when performing the laser treatment 11, the binding material becomes plastic and is this treatment step followed by a treatment whereby the fibers are pressed into the binding material by means of a pressing element, such that, when the binding material is cooling off again, a smooth surface is obtained.

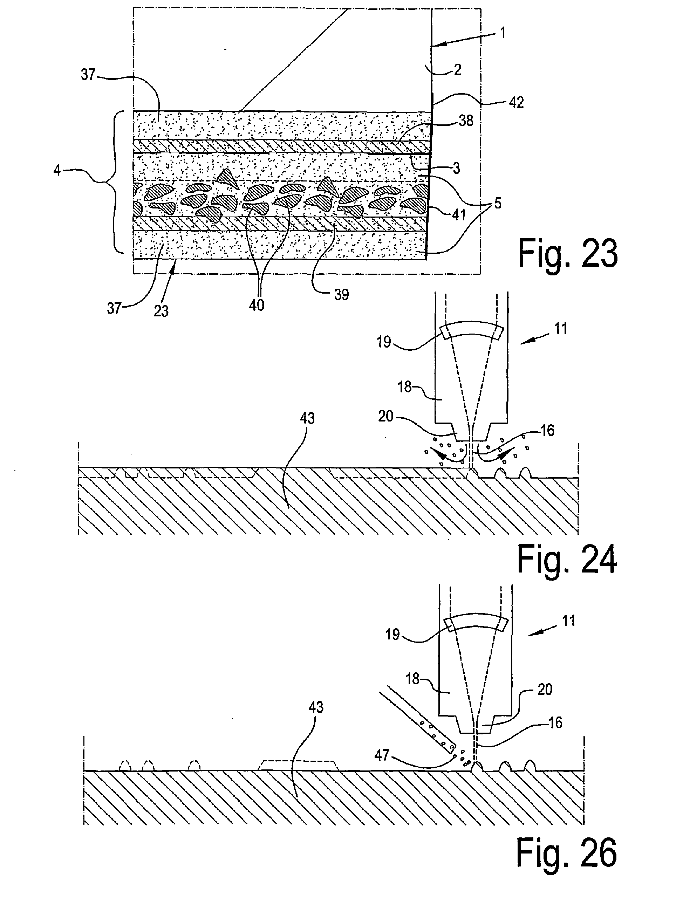

Figures 22 and 23 represent a method according to the invention. To this aim, this method comprises at least a treatment step in which, by means of a heat source, in this case a laser beam 16, a thermal treatment is given to at least one edge, preferably an upper edge 25, of the laminate panels, whereby this thermal treatment includes a discoloration 42 of the respective edge. Figure 23 shows an enlarged view of the area indicated by F23 in figure 22 and shows that the respective discoloration preferably manifests itself at least on the top layer 4, and, as represented, still better continues over the entire top layer 4 even up to the core 2. The discoloration presumably is obtained by the partial burning of the top layer 4 and/or the core 2 and/or the decor 3 and/or the deposition of soot particles as a result of a burning, either of the top layer 4, or of the core 2 or of the decor 3.

Preferably, the heat treatment is performed by means of a heat source, the power of which can be set in function of the desired color of the respective edge. Hereby, a variation between light brown and black is preferred, as such discoloration is desired in particular with dark decors.

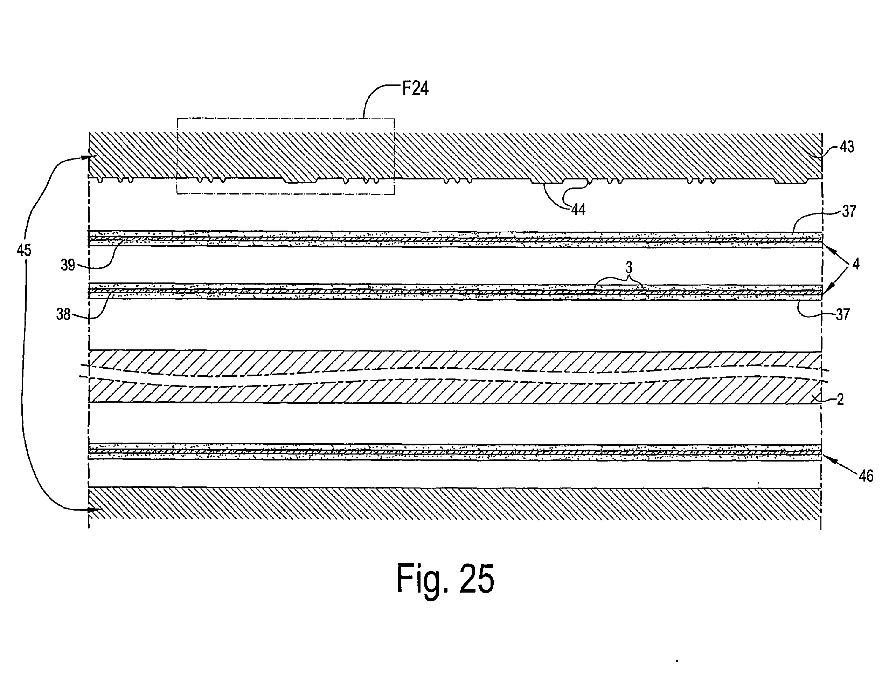

Figures 24 and 25 illustrate a method not belonging to the scope of the claimed invention. To this aim, they represent a method comprising at least two treatment steps.

Figure 24 illustrates the first treatment step, namely producing a press plate 43, which is provided with a relief 44. As represented in figure 24, this relief is realized at least by means of a laser treatment 11. Here, a laser treatment 11 is concerned that is digitally controlled and removes material portions from a substrate in order to form the aforementioned relief on the press plate. The represented relief consists of several kinds of projections. These projections are intended, for example, for applying embossed portions in the floor panel 1 in the shape of wood pores or the like, or in order to impress joints into the laminate material 6. The use of such relief is well known as such.

Figure 25 shows how such press plate then in a second treatment step is applied for forming the aforementioned floor panels 1, in order to realize, by means of said relief, embossed portions in the upper surface of the floor panels 1, and more particularly in a board-shaped laminate material 6, from which subsequently such floor panels 1 are formed. In this case, this relates to a laminate material 6 of the DPL type, whereby in a press 45, at the upper side of a core 2, preferably a wood-based core 2, the top layer 4, consisting in this case of two carrier sheets soaked in resin, is directly pressed upon the core 2 under the influence of temperature and pressure. At the underside of the core 2, a backing layer 46 is provided, which also consists of a carrier sheet soaked in resin.

According to figure 26, the press plate is provided with a relief by means of a material-depositing process, for example, a laser treatment, such as selective laser sintering, laser cladding or the like. By such process, the relief can be built up in layers and this relief possibly may consist of another material than the material of the press plate, for example, a material with particular features, such as a wear-resistant material. As represented, this material 47 can be supplied in the form of a powder, after which it is consolidated at the desired location, for example, under the influence of a laser beam 16. In such laser treatment, it is preferred to apply a Nd-YAG laser, in combination with a so-called scanner. This scanner, as known, consists of a set of mirrors deflecting the beam towards the desired location of incidence on the press plate.

Further, it is noted that by the aforementioned movement of the floor panels 1 over the laser beam 16, or the possible cutting tools of the aforementioned other treatment 12, a relative movement is intended and that it is thus not excluded that both the floor panels 1 and the laser beam 16 move and/or that, in a particular case, only the laser beam 16 moves. The most preferred form of embodiment, however, is the one whereby only the floor panels 1 are moving.

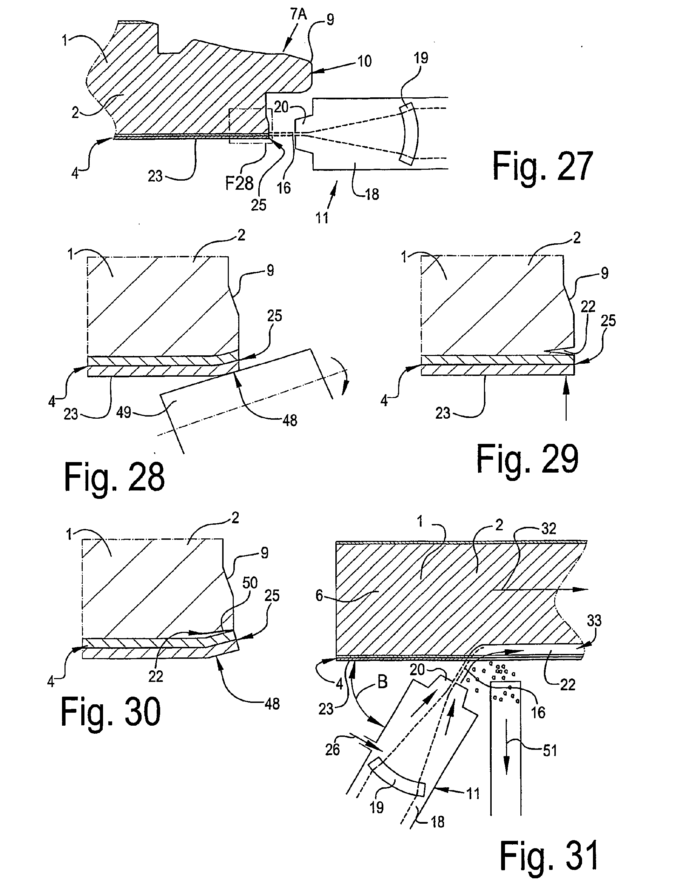

Figures 27 and 28 represent a method , wherein the laser treatment 11 is applied for manufacturing floor panels 1 whereby a sunk edge area 48 is provided at one or more upper edges 25. More particularly, hereby the sunk edge area 48 is realized at least by means of a laser beam 16 beaming on the floor panel 1 at the height of the upper edge 25. As represented in figure 27, the laser beam 16 is applied at least for heating and/or softening the top layer 4 and/or of a material situated therebeneath. As represented in figure 28, then the heated or softened material, by means of a pressing roller 49 or other pressing element, is transformed to a sunk edge area 48.

According to an alternative method that is illustrated in figures 29 and 30, the laser treatment of figure 27 is applied for removing a material 22 from the top layer 4 and/or a material situated therebeneath, more particularly the core 2, in such a manner that the portion of the top layer 4 situated at the upper edge 25 of the floor panel can be pushed towards the core 2 or the like, such that in this case, too, a sunk edge area 48 is created. It is noted that, when performing this method, preferably glue 50 is provided in the formed cut 22 in order to retain said portion of the top layer 4 in its transformed position, in other words, the position of this portion represented in figure 30.

Figure 31 represents a method according to the invention whereby at least a suction effect or suction operation 51 is created transverse, and in this case perpendicular, to the surface or decorative side 23 of the floor panel 1 to be formed, above the already formed cut 22 in the immediate proximity of the laser front. By the immediate proximity of the laser front is meant there, where the smoke gasses and particles rise or are deposited. As aforementioned, such suction operation 51 preferably is combined with a blowing operation, such as, for example, the external gas flow 31 represented in figure 6.

According to a deviating form of embodiment of the invention, another beam technique instead of "laser" shall be applied, where this is possible. The laser beam can be replaced, for example, for cutting, by a beam of another medium, whereby medium has to be understood in its broadest sense, and whereby, amongst others, an ion beam, electron beam, liquid beam, gas beam, spark beam (electric discharge machining), or the like are contemplated.

The present invention is in no way limited to the forms of embodiment described by way of example and represented in the figures; on the contrary may such method and such panel be realized according to various variants, without deviating from the scope of the invention, as defined by the appended claims. The aforementioned saw cut 28, for example, may also be realized in any other manner, possibly with a laser, too.

## Claims

1. Method for manufacturing floor panels, of the type, which comprises a top layer (4) on the basis of synthetic material (5) and which, at least at two opposite sides (7A-8A; 7B-8B), has profiled edge areas (9) that comprise at least coupling parts (10), wherein, for manufacturing the floor panels (1), one starts from a board-shaped material (6) and wherein the floor panels (1) are formed at least partially by means of a laser treatment (11), **characterized in that** said laser treatment is applied for removing a material portion (22-29) from the top layer (4) and wherein by means of said laser treatment (11) at least a portion of the final surface of the profiled edge area (9) is established.

2. Method according to claim 1, **characterized in that** by means of the laser treatment (11), material is removed transversally through the top layer (4), over the entire thickness thereof, preferably in the form of a cut (22) extending through the top layer (4).

3. Method according to any of the preceding claims, **characterized in that** by means of said laser treatment the final upper edge (25) of the floor panel (1) is formed, at least for a portion of the circumference of the floor panel (1).

4. Method according to claim 3, **characterized in that** by means of said laser treatment a smooth final upper edge of the floor panel is formed.

5. Method according to any of the preceding claims, **characterized in that** for forming the floor panels (1) of the board-shaped material, use is made of said laser treatment (11) as well as of at least one or more other treatments (12), which are performed by means of one or more mechanical cutting tools (13).

6. Method according to claim 5, **characterized in that** the laser treatment (11) and the aforementioned other treatments (12) are combined such that, by applying the laser treatment (11), the contact between, on the one hand, the cutting tool (13), cutting tools, respectively, and, on the other hand, the aforementioned top layer (4) is reduced, more particularly is reduced in respect to the contact usually existing between such cutting tools and the top layer, when such floor panels (1) were to be manufactured entirely by means of mechanical cutting treatments of the board-shaped material.

7. Method according to claim 6, **characterized in that** the laser treatment (11) and said other treatments (12) are combined such that, by applying the laser treatment (11), the contact between the mechanical cutting tools and said top layer (4) is entirely excluded.

8. Method according to any of the preceding claims, **characterized in that** it is applied for removing excess material (27) when forming the profiled edge area (9) and that hereby at least two cuts are realized, on the one hand, a cut (22) by means of a laser treatment (11) at least partially through the top layer (4), and, on the other hand, a cut (28) by means of at least one mechanical cutting tool (13), whereby both cuts border a quantity of excess material (27), which comprises at least a portion (29) of the initial top layer (4) and which, by providing both cuts, is released entirely.

9. Method according to any of the preceding claims, **characterized in that** it is applied for removing excess material when forming the profiled edge area, and that hereby at least two cuts are realized, on the one hand, a cut by means of a laser treatment (11) at least partially through the top layer (4), and, on the other hand, a cut by means of at least one mechanical cutting tool (13), whereby both cuts border a quantity of excess material, which comprises at least a portion of the initial top layer (4) and which, by providing both cuts, is connected to the board-shaped material solely by a remaining weakened material portion, which then simply is removed, for example, by breaking it off.

10. Method according to any of the preceding claims, **characterized in that** said laser treatment (11) is applied for removing a material portion (22) from the core (2).

11. Method according to claim 10, **characterized in that** said profiled edge area is provided with a chamfer (35), whereby the final surface of this chamfer is formed at least partially by means of said laser treatment (11).

12. Method according to any of the preceding claims, **characterized in that** by means of the laser treatment (11), whether or not in combination with additional treatments, a thermal surface treatment is effected at least in one portion of the final surface of the profiled edge area.

13. Method according to claim 12, **characterized in that** the thermal surface treatment consists at least in causing a discoloration (42).

14. Method according to claim 12 or 13, **characterized in that** the thermal surface treatment consists at least of heating the surface by means of the laser, followed by smoothing the heated surface in heated condition in order to enhance the smoothness of the surface.

15. Method according to any of the preceding claims, **characterized in that** the profiled edge area (9) is formed at a speed higher than 100 m/min, and even better higher than 150 m/min.

16. Method according to any of the preceding claims, **characterized in that** it is applied for manufacturing floor panels (1) whereby one starts from a board-shaped material (6) upon which said top layer (4) is present and whereby hereby a top layer (4) is concerned comprising particles of a wear-resistant material, such as Al₂O₃.

17. Method according to any of the preceding claims, **characterized in that** it is applied for manufacturing laminate floor panels, which comprise a core (2), whether or not composed of several layers or portions, a decor (3), as well as said top layer (4) of synthetic material (5).

18. Method according to claim 17, **characterized in that** it is applied for manufacturing laminate floor panels, whereby the top layer (4) has one or more of the following features:
- that it consists of maximum three resin-soaked and pressed upon the core (2) carrier sheets (38-39), amongst which a printed decor layer;
- that it is manufactured in the form of "DPL" (Direct Pressure Laminate);
- that it is thinner than 0.5 mm.

19. Method according to any of the preceding claims, **characterized in that** it is applied for manufacturing floor panels (1) consisting at least partially of a material on the basis of fibers, preferably wood fibers, which are consolidated with a binding agent, such as MDF or HDF.

20. Method according to any of the preceding claims, **characterized in that**, during performing the laser treatment (11), a blowing effect is provided, too, in order to remove released material portions.

21. Method according to claim 20, **characterized in that**, by means of the laser treatment (11), a laser front is created that moves relatively in respect to the board-shaped material, and that a blowing and/or suction effect is provided, which is **characterized by** one or more and preferably a combination of the following features:
- that there is at least a blowing effect substantially according to a direction opposite to the direction with which the laser front moves along the board-shaped material, whether or not being realized by means of cutting gas;
- that there is at least a blowing effect substantially according to a direction situated transversally to the direction with which the laser front is moving along the board-shaped material, and at the same time directed away from the finally to be formed floor panel (1);
- that there is at least a suction effect (51) transverse, and preferably substantially perpendicular, to the surface (23) of the floor panel (1) to be formed, above the already formed cut in the immediate proximity of the laser front.

22. Method according to any of the preceding claims, **characterized in that**, by means of the laser treatment (11), a laser front is created that is moving in respect to the board-shaped material, and **in that** one works with a laser beam (16) that is situated at an angle in respect of the surface of the board-shaped material, whereby the arrangement at an angle is performed such that it fulfills at least one of the following and preferably a combination of the following features:
- that the surface presented to the laser treatment (11), in other words, the surface situated immediately in front of the laser front, and the laser beam (16) form an angle of less than 90°;
- that the surface presented to the laser treatment (11), in other words, the surface situated immediately in front of the laser front, and the laser beam (16) form an angle between 50 and 70°;
- that the surface presented to the laser treatment (11), in other words, the surface situated immediately in front of the laser front, and the laser beam (16) form an angle according to any of the possibilities defined herein above, whereby, next to the laser beam (16), a gas flow is supplied to the floor panel (1) by means of the same laser head (18), in substantially the same direction.

23. Method according to any of the preceding claims, **characterized in that** said floor panels (1) are moved along the laser beam (16).

24. Method according to any of the preceding claims, **characterized in that** the laser treatment (11) is performed by a laser beam (16) that is generated by a CO₂ laser with a power of more than 1 kW and even better more than 2 kW.

25. Method according to any of the preceding claims, **characterized in that** in the aforementioned laser treatment (11) at least two laser beams are used, which originate from one laser source, the beam of which is split.

26. Method according to claim 25, **characterized in that** the aforementioned two laser beams treat two opposite sides (7A-8A; 7B-8B) of the floor panel.

27. Method according to any of the claims 1 to 26, **characterized in that** the laser treatment (11) is at least applied for influencing the mechanical and/or thermal and/or other features of at least a portion of the surface (23) of the floor panels (1).

28. Method according to claim 27, **characterized in that** the laser treatment (11) is at least applied for at least temporarily softening the material of the top layer (4) locally, whereby in the softer condition then another treatment is performed on this material, more particularly a mechanical cutting treatment, and in particular a cutting treatment for forming the aforementioned profiled edge areas (9).

29. Floor panel, **characterized in that** it is manufactured according to the method of any of the preceding claims, the floor panel being of the type, which comprises a top layer (4) on the basis of synthetic material (5) and which, at least at two opposite sides (7A-8A; 7B-8B), has profiled edge areas (9) that comprise at least coupling parts (10), the floor panel further comprises a material portion (22-29) from the top layer (4) removed by a laser treatment and at least a portion of the final surface of the profiled edge area (9) established by means of said laser treatment (11).

## Patentansprüche

1. Verfahren zur Herstellung von Fußbodenpaneelen des Typs, der eine Toplage (4) auf Basis von Kunststoff (5) umfasst und der, mindestens an zwei gegenüberliegenden Seiten (7A-8A; 7B-8B), mit Profil versehene Randbereiche (9) aufweist, die mindestens Koppelteile (10) umfassen, wobei zur Herstellung der Fußbodenpaneele (1) von einem plattenförmigen Material (6) ausgegangen wird und wobei die Fußbodenpaneele (1) mindestens teilweise mittels einer Laserbehandlung (11) geformt werden, **dadurch gekennzeichnet, dass** besagte Laserbehandlung zum Entfernen eines Materialteils (22-29) von der Toplage (4) angewendet wird, und wobei mittels besagter Laserbehandlung (11) mindestens ein Teil der letztendlichen Oberfläche des mit Profil versehenen Randbereichs (9) erstellt wird.

2. Verfahren nach Anspruch 1, **dadurch gekennzeichnet, dass** mittels der Laserbehandlung (11) Material quer durch die Toplage (4) entfernt wird, über deren gesamte Dicke, bevorzugt in Form eines sich durch die Toplage (4) erstreckenden Schnitts (22).

3. Verfahren nach einem der vorgenannten Ansprüche, **dadurch gekennzeichnet, dass** mittels besagter Laserbehandlung die letztendliche Oberkante (25) des Fußbodenpaneels (1) geformt wird, zumindest für einen Teil des Umfangs des Fußbodenpaneels (1).

4. Verfahren nach Anspruch 3, **dadurch gekennzeichnet, dass** mittels besagter Laserbehandlung eine glatte letztendliche Oberkante des Fußbodenpaneels gebildet wird.

5. Verfahren nach einem der vorgenannten Ansprüche, **dadurch gekennzeichnet, dass**, zum Formen der Fußbodenpaneele (1) aus dem plattenförmigen Material, sowohl von besagter Laserbehandlung (11) als auch von mindestens einer oder mehreren anderen Behandlungen (12), die mittels eines oder mehrerer mechanischer Schneidwerkzeuge (13) durchgeführt werden, Gebrauch gemacht wird.

6. Verfahren nach Anspruch 5, **dadurch gekennzeichnet, dass** die Laserbehandlung (11) und die vorgenannten anderen Behandlungen (12) so kombiniert werden, dass durch Anwenden der Laserbehandlung (11) der Kontakt zwischen dem Schneidwerkzeug (13) beziehungsweise den Schneidewerkzeugen einerseits und der vorgenannten Toplage (4) andererseits reduziert wird, spezieller reduziert wird in Bezug auf den Kontakt, der normalerweise zwischen solchen Schneidwerkzeugen und der Toplage besteht, wenn solche Fußbodenpaneele (1) vollständig mittels mechanischer Schneidebehandlungen des plattenförmigen Materials hergestellt würden.

7. Verfahren nach Anspruch 6, **dadurch gekennzeichnet, dass** die Laserbehandlung (11) und die anderen Behandlungen (12) so kombiniert werden, dass durch Anwenden der Laserbehandlung (11) der Kontakt zwischen den mechanischen Schneidwerkzeugen und der Toplage (4) vollständig ausgeschlossen wird.

8. Verfahren nach einem der vorgenannten Ansprüche, **dadurch gekennzeichnet, dass** es zum Entfernen überschüssigen Materials (27) beim Formen des mit Profil versehenen Randbereichs (9) angewendet wird, und dass hierbei mindestens zwei Schnitte verwirklicht werden, einerseits ein Schnitt (22) mittels einer Laserbehandlung (11) mindestens teilweise durch die Toplage (4), und andererseits ein Schnitt (28) mittels mindestens eines mechanischen Schneidwerkzeugs (13), wobei beide Schnitte eine bestimmte Menge überschüssigen Materials (27) begrenzen, die mindestens einen Teil (29) der ursprünglichen Toplage (4) umfasst und die durch Anbringen beider Schnitte vollständig abgelöst wird.

9. Verfahren nach mindestens einem der vorgenannten Ansprüche, **dadurch gekennzeichnet, dass** es zum Entfernen überschüssigen Materials beim Formen des mit Profil versehenen Randbereichs angewendet wird, und dass hierbei mindestens zwei Schnitte verwirklicht werden, einerseits ein Schnitt mittels einer Laserbehandlung (11) mindestens teilweise durch die Toplage (4), und andererseits ein Schnitt mittels mindestens eines mechanischen Schneidwerkzeugs (13), wobei beide Schnitte eine bestimmte Menge überschüssigen Materials begrenzen, die mindestens einen Teil (29) der ursprünglichen Toplage (4) umfasst und die durch Anbringen beider Schnitte nur durch einen verbleibenden, geschwächten Materialteil mit dem plattenförmigen Material verbunden ist, welcher Materialteil dann einfach entfernt wird, beispielsweise, indem er abgebrochen wird.

10. Verfahren nach mindestens einem der vorgenannten Ansprüche, **dadurch gekennzeichnet, dass** die Laserbehandlung (11) zum Entfernen eines Materialteils (22) von dem Kern (2) angewendet wird.

11. Verfahren nach Anspruch 10, **dadurch gekennzeichnet, dass** der mit Profil versehene Randbereich mit einer Abfasung (35) versehen ist, wobei die letztendliche Oberfläche dieser Abfasung mindestens teilweise mittels der Laserbehandlung (11) gebildet wird.

12. Verfahren nach mindestens einem der vorgenannten Ansprüche, **dadurch gekennzeichnet, dass** mittels der Laserbehandlung (11), entweder in Kombination mit zusätzlichen Behandlungen oder nicht, eine thermische Oberflächenbehandlung mindestens in einem Teil der letztendlichen Oberfläche des mit Profil versehenen Randbereichs bewerkstelligt wird.

13. Verfahren nach Anspruch 12, **dadurch gekennzeichnet, dass** die thermische Oberflächenbehandlung mindestens im Verursachen einer Verfärbung (42) besteht.

14. Verfahren nach Anspruch 12 oder 13, **dadurch gekennzeichnet, dass** die thermische Oberflächenbehandlung mindestens aus dem Erhitzen der Oberfläche mittels des Lasers besteht, gefolgt vom Glätten der erhitzten Oberfläche in erhitztem Zustand, um die Glätte der Oberfläche zu verbessern.

15. Verfahren nach mindestens einem der vorgenannten Ansprüche, **dadurch gekennzeichnet, dass** der mit Profil versehene Randbereich (9) bei einer Geschwindigkeit von mehr als 100 m/min und noch besser mehr als 150 m/min geformt wird.

16. Verfahren nach mindestens einem der vorgenannten Ansprüche, **dadurch gekennzeichnet, dass** es zur Herstellung von Fußbodenpaneelen (1) angewendet wird, wobei man von einem plattenförmigen Material (6) ausgeht, worauf die Toplage (4) vorhanden ist, und wobei es sich hierbei um eine Toplage (4) handelt, die Partikel eines abriebbeständigen Materials, wie etwa Al₂O₃, umfasst.

17. Verfahren nach mindestens einem der vorgenannten Ansprüche, **dadurch gekennzeichnet, dass** es zur Herstellung von Laminatfußbodenpaneelen angewendet wird, die einen Kern (2), entweder aus mehreren Lagen oder Teilen zusammengesetzt oder nicht, ein Dekor (3) sowie besagte Toplage (4) aus Kunststoff (5) umfassen.

18. Verfahren nach Anspruch 17, **dadurch gekennzeichnet, dass** es zur Herstellung von Laminatfußbodenpaneelen angewendet wird, wobei die Toplage (4) eine oder mehrere der folgenden Eigenschaften aufweist:
- dass sie aus maximal drei harzgetränkten und auf den Kern (2) gepressten Trägerbögen (38-39) besteht, worunter eine bedruckte Dekorschicht;
- dass sie in Form von "DPL" (Direct Pressure Laminate) hergestellt wird;
- dass sie dünner als 0,5 mm ist.

19. Verfahren nach einem der vorgenannten Ansprüche, **dadurch gekennzeichnet, dass** es zur Herstellung von Fußbodenpaneelen (1) angewendet wird, die mindestens teilweise aus einem Material auf Basis von Fasern, bevorzugt Holzfasern, die mit einem Bindemittel verfestigt sind, bestehen, wie etwa MDF oder HDF.

20. Verfahren nach einem der vorgenannten Ansprüche, **dadurch gekennzeichnet, dass** während der Durchführung der Laserbehandlung (11) auch eine Blaswirkung vorgesehen wird, um abgelöste Materialteilchen zu entfernen.

21. Verfahren nach Anspruch 20, **dadurch gekennzeichnet, dass** mittels der Laserbehandlung (11) eine Laserfront erzeugt wird, die sich relativ in Bezug auf das plattenförmige Material bewegt, und dass eine Blas- und/oder Saugwirkung vorgesehen wird, die **gekennzeichnet ist durch** eine oder mehrere und bevorzugt eine Kombination der folgenden Eigenschaften:
- dass mindestens eine Blaswirkung vorliegt im Wesentlichen in einer Richtung entgegengesetzt zu der Richtung, womit sich die Laserfront entlang dem plattenförmigen Material bewegt, die entweder mittels Schneidgas verwirklicht ist oder nicht;
- dass mindestens eine Blaswirkung vorliegt im Wesentlichen in einer Richtung quer zu der Richtung, womit sich die Laserfront entlang dem plattenförmigen Material bewegt, und gleichzeitig von dem letztendlich zu formenden Fußbodenpaneel (1) weg gerichtet;
- dass mindestens eine Saugwirkung (51) quer, und bevorzugt im Wesentlichen senkrecht, zu der Oberfläche (23) des zu formenden Fußbodenpaneels (1) vorliegt, über dem bereits geformten Schnitt in der unmittelbaren Umgebung der Laserfront.

22. Verfahren nach einem der vorgenannten Ansprüche, **dadurch gekennzeichnet, dass** mittels der Laserbehandlung (11) eine Laserfront erzeugt wird, die sich relativ in Bezug auf das plattenförmige Material bewegt, und dass mit einem Laserstrahl (16) gearbeitet wird, der sich in Bezug auf die Oberfläche des plattenförmigen Materials unter einem Winkel befindet, wobei die Anordnung unter einem Winkel so ausgeführt ist, dass sie mindestens eine der folgenden und bevorzugt eine Kombination der folgenden Eigenschaften erfüllt:
- dass die der Laserbehandlung (11) angebotene Oberfläche, mit anderen Worten, die Oberfläche, die sich unmittelbar vor der Laserfront befindet, und der Laserstrahl (16) einen Winkel von weniger als 90° bilden;
- dass die der Laserbehandlung (11) angebotene Oberfläche, mit anderen Worten, die Oberfläche, die sich unmittelbar vor der Laserfront befindet, und der Laserstrahl (16) einen Winkel von zwischen 50 und 70° bilden;
- dass die der Laserbehandlung (11) angebotene Oberfläche, mit anderen Worten, die Oberfläche, die sich unmittelbar vor der Laserfront befindet, und der Laserstrahl (16) einen Winkel gemäß einer der hierin vorangehend definierten Möglichkeiten bilden, wobei in Nähe des Laserstrahls (16) dem Fußbodenpaneel (1) mittels desselben Laserkopfs (18) in im Wesentlichen derselben Richtung ein Gasstrom zugeführt wird.

23. Verfahren nach einem der vorgenannten Ansprüche, **dadurch gekennzeichnet, dass** besagte Fußbodenpaneele (1) an dem Laserstrahl (16) entlangbewegt werden.

24. Verfahren nach einem der vorgenannten Ansprüche, **dadurch gekennzeichnet, dass** die Laserbehandlung (11) durch einen Laserstrahl (16) durchgeführt wird, der durch einen CO₂-Laser mit einer Leistung von mehr als 1 kW und besser noch mehr als 2 kW erzeugt wird.

25. Verfahren nach einem der vorgenannten Ansprüche, **dadurch gekennzeichnet, dass** bei der vorgenannten Laserbehandlung (11) mindestens zwei Laserstrahlen angewendet werden, die von einer Laserquelle stammen, deren Strahl aufgeteilt ist.

26. Verfahren nach Anspruch 25, **dadurch gekennzeichnet, dass** die vorgenannten zwei Laserstrahlen zwei gegenüberliegende Seiten (7A-8A; 7B-8B) des Fußbodenpaneels behandeln.

27. Verfahren nach einem der Ansprüche 1 bis 26, **dadurch gekennzeichnet, dass** die Laserbehandlung (11) mindestens zur Beeinflussung der mechanischen und/oder thermischen und/oder anderer Eigenschaften von mindestens einem Teil der Oberfläche (23) der Fußbodenpaneele (1) angewendet wird.

28. Verfahren nach Anspruch 27, **dadurch gekennzeichnet, dass** die Laserbehandlung (11) mindestens angewendet wird, um das Material der Toplage (4) mindestens zeitweilig örtlich zu erweichen, wobei in dem weicheren Zustand dann eine andere Behandlung an diesem Material durchgeführt wird, spezieller eine mechanische Schneidbehandlung, und insbesondere eine Schneidbehandlung zum Formen der vorgenannten, mit Profil versehenen Randbereiche (9).

29. Fußbodenpaneel, **dadurch gekennzeichnet, dass** es gemäß dem Verfahren nach einem der vorgenannten Ansprüche hergestellt ist, wobei das Fußbodenpaneel von dem Typ ist, der eine Toplage (4) auf Basis von Kunststoff (5) umfasst und der, mindestens an zwei gegenüberliegenden Seiten (7A-8A; 7B-8B), mit Profil versehene Randbereiche (9) aufweist, die mindestens Koppelteile (10) umfassen, wobei das Fußbodenpaneel weiter einen durch eine Laserbehandlung von der Toplage (4) entfernten Materialteil (22-29) umfasst und mindestens einen Teil der letztendlichen Oberfläche des mit Profil versehenen Randbereichs (9), der mittels besagter Laserbehandlung (11) erstellt ist.

## Revendications

1. Procédé pour fabriquer des panneaux de sol du type qui comprennent une couche supérieure (4) à base d'une matière synthétique (5) et qui, au moins à deux côtés opposés (7A-8A ; 7B-8B), possèdent des zones marginales profilées (9) qui comprennent au moins des éléments d'accouplement (10), procédé dans lequel, pour fabriquer les panneaux de sol (1), on part d'un matériau (6) en forme de planche, et dans lequel les panneaux de sol (1) sont réalisés au moins en partie au moyen d'un traitement au laser (11), **caractérisé en ce que** ledit traitement au laser est appliqué pour éliminer une portion de matière (22-29) de la couche supérieure (4), et dans lequel, au moyen dudit traitement au laser (11), on établit au moins une portion de la surface finale de la zone marginale profilée (9).

2. Procédé selon la revendication 1, **caractérisé en ce que**, au moyen du traitement au laser (11), de la matière est enlevée en direction transversale à travers la couche supérieure (4), sur toute l'épaisseur de ladite couche, de préférence sous la forme d'une découpe (22) s'étendant à travers la couche supérieure (4).

3. Procédé selon l'une quelconque des revendications précédentes, **caractérisé en ce que**, au moyen dudit traitement au laser, on forme le bord supérieur final (25) du panneau de sol (1), au moins sur une portion de la circonférence du panneau de sol (1).

4. Procédé selon la revendication 3, **caractérisé en ce que**, au moyen dudit traitement au laser, on forme un bord supérieur final lisse du panneau de sol.

5. Procédé selon l'une quelconque des revendications précédentes, **caractérisé en ce que**, pour former les panneaux de sol (1) du matériau en forme de planche, on fait usage dudit traitement au laser (11) et également d'au moins un ou plusieurs autres traitements (12) qui sont mis en oeuvre au moyen d' un ou de plusieurs outils mécaniques de découpage (13).

6. Procédé selon la revendication 5, **caractérisé en ce que** le traitement au laser (11) et les autres traitements susmentionnés (12) sont combinés de telle sorte que, en appliquant le traitement au laser (11), on réduit le contact entre, d'une part l'outil de découpage (13), les outils de découpage, respectivement et, d'autre part la couche supérieure susmentionnée (4), plus particulièrement on réduit le contact par rapport au contact qui existe habituellement entre de tels outils de découpage et la couche supérieure, lorsqu'il s'agissait de fabriquer de tels panneaux de sol (1) entièrement au moyen de traitements de découpage mécanique du matériau en forme de planche.

7. Procédé selon la revendication 6, **caractérisé en ce que** le traitement au laser (11) et lesdits autres traitements (12) sont combinés de telle sorte que, en appliquant le traitement au laser (11), on exclut entièrement le contact entre les outils mécaniques de découpage et ladite couche supérieure (4).

8. Procédé selon l'une quelconque des revendications précédentes, **caractérisé en ce qu'**il est mis en oeuvre pour éliminer de la matière en excès (27) lors de la formation de la zone marginale profilée (9), et **en ce qu'**on réalise de cette manière au moins deux découpes, d'une part une découpe (22) au moyen d'un traitement au laser (11) au moins en partie à travers la couche supérieure (4) et, d'autre part une découpe (28) au moyen d'au moins un outil mécanique de découpage (13), les deux découpes délimitant une quantité de matière en excès (27) qui comprend au moins une portion (29) de la couche supérieure initiale (4) et qui, par le fait de prévoir les deux découpes, est entièrement éliminée.

9. Procédé selon l'une quelconque des revendications précédentes, **caractérisé en ce qu'**il est mis en oeuvre pour éliminer de la matière en excès lors de la formation de la zone marginale profilée, et **en ce qu'**on réalise de cette manière au moins deux découpes, d'une part une découpe au moyen d'un traitement au laser (11) au moins en partie à travers la couche supérieure (4) et, d'autre part une découpe au moyen d'au moins un outil mécanique de découpage (13), les deux découpes délimitant une quantité de matière en excès (27) qui comprend au moins une portion de la couche supérieure initiale (4) et qui, par le fait de prévoir les deux découpes, est reliée au matériau en forme de planche uniquement par une portion de matière affaiblie restante qui est par la suite éliminée de manière simple par exemple en la rompant.

10. Procédé selon l'une quelconque des revendications précédentes, **caractérisé en ce que** ledit traitement au laser (11) est mis en oeuvre pour éliminer une portion de matières (22) de la partie centrale (2).

11. Procédé selon la revendication 10, **caractérisé en ce que** ladite zone marginale profilée est munie d'un chanfrein (35), la surface finale de ce chanfrein étant formée au moins en partie au moyen dudit traitement au laser (11).

12. Procédé selon l'une quelconque des revendications précédentes, **caractérisé en ce que**, au moyen du traitement au laser (11), que ce soit ou non en combinaison avec des traitements supplémentaires, on procède à un traitement thermique superficiel au moins dans une portion de la surface finale de la zone marginale profilée.

13. Procédé selon la revendication 12, **caractérisé en ce que** le traitement thermique superficiel consiste au moins à provoquer une décoloration (42).

14. Procédé selon la revendication 12 ou 13, **caractérisé en ce que** le traitement thermique superficiel consiste au moins à chauffer la surface au moyen du laser, avant de lisser la surface à l'état chauffé afin d'améliorer le lissé de la surface.

15. Procédé selon l'une quelconque des revendications précédentes, **caractérisé en ce que** la zone marginale profilée (9) est formée à une vitesse supérieure à 100 m/min., et encore mieux supérieure à 150 m/min.

16. Procédé selon l'une quelconque des revendications précédentes, **caractérisé en ce qu'**il est mis en oeuvre pour la fabrication de panneaux de sol (1), par lequel on commence avec un matériau en forme de planche (6) sur lequel est présente ladite couche supérieure (4), et par lequel, la couche supérieure (4) concernée comprend en l'occurrence des particules d'une matière résistant à l'usure, telle que Al₂O₃.

17. Procédé selon l'une quelconque des revendications précédentes, **caractérisé en ce qu'**il est mis en oeuvre pour fabriquer des panneaux de sol stratifiés, qui comprennent une partie centrale (2) composée ou non de plusieurs couches ou portions, une décoration (3), ainsi que ladite couche supérieure (4) constituée d'une matière synthétique.

18. Procédé selon la revendication 17, **caractérisé en ce qu'**il est mis en oeuvre pour fabriquer des panneaux de sol stratifiés, par lequel la couche supérieure (4) possède une ou plusieurs des caractéristiques ci-après :
- **en ce qu'**elle est constituée au maximum par trois feuilles de support (38-39) imprégnées de résine et appliquées par compression sur la partie centrale (2), parmi lesquelles une couche de décoration imprimée ;
- **en ce qu'**elle est fabriquée sous la forme d'un « DPL » (stratifié obtenu par pression directe) ;
- **en ce qu'**elle est plus mince que 0,5 mm.

19. Procédé selon l'une quelconque des revendications précédentes, **caractérisé en ce qu'**il est mis en oeuvre pour fabriquer des panneaux de sol (1) constitués, au moins en partie, d'un matériau à base de fibres, de préférence des fibres de bois, qui sont consolidées avec un agent de liaison tel que du MDF ou du HDF.

20. Procédé selon l'une quelconque des revendications précédentes, **caractérisé en ce que**, lors d'une mise en oeuvre du traitement au laser (11), on procure également un effet de soufflage afin d'éliminer des portions de matière libérées.

21. Procédé selon la revendication 20, **caractérisé en ce que**, au moyen du traitement au laser (11), on crée un front laser qui se déplace par rapport au matériau en forme de planche, et **en ce qu'**on prévoit un effet de soufflage et/ou d'aspiration qui se **caractérise par** une ou plusieurs des caractéristiques ci-après et de préférence par une combinaison desdites caractéristiques :
- en ce qu'on prévoit au moins un effet de soufflage essentiellement dans la direction opposée à la direction dans laquelle se déplace le front laser le long du matériau en forme de planche, qu'il soit réalisé ou non au moyen d'un gaz de découpage ;
- en ce qu'on prévoit au moins un effet de soufflage essentiellement dans une direction qui s'étend transversalement par rapport à la direction dans laquelle se déplace le front laser le long du matériau en forme de planche, et qui est en même temps orientée à l'écart du panneau de sol (1) à réaliser en définitive ;
- en ce qu'on prévoit au moins un effet d'aspiration (51) en direction transversale et, de préférence, essentiellement perpendiculaire à la surface (23) du panneau de sol (1) à réaliser, au-dessus de la découpe déjà réalisée à proximité immédiate du front laser.

22. Procédé selon l'une quelconque des revendications précédentes, **caractérisé en ce que**, au moyen du traitement au laser (11), on crée un front laser qui se déplace par rapport au matériau en forme de planche, et **en ce qu'**on travaille avec un faisceau laser (16) qui est situé en formant un angle par rapport à la surface du matériau en forme de planche, par lequel l'arrangement angulaire est réalisé de telle sorte qu'il répond à au moins une des caractéristiques ci-après et de préférence à une combinaison desdites caractéristiques :
- **en ce que** la surface présentée au traitement au laser (11), en d'autres termes, la surface située directement devant le front laser, et le faisceau laser (16) forment un angle inférieur à 90° ;
- **en ce que** la surface présentée au traitement au laser (11), en d'autres termes, la surface située directement devant le front laser, et le faisceau laser (16) forment un angle entre 50 et 70° ;
- **en ce que** la surface présentée au traitement au laser (11), en d'autres termes, la surface située directement devant le front laser, et le faisceau laser (16) forment un angle en fonction de l'une quelconque des possibilités définies en l'occurrence ci-dessus, par lequel, à côté du faisceau laser (16), un courant de gaz est acheminé au panneau de sol (1) au moyen de la même tête laser (18), essentiellement dans la même direction.

23. Procédé selon l'une quelconque des revendications précédentes, **caractérisé en ce que** lesdits panneaux de sol (1) se déplacent le long du faisceau laser (16).

24. Procédé selon l'une quelconque des revendications précédentes, **caractérisé en ce que** le traitement au laser (11) est mis en oeuvre via un faisceau laser (16) qui est généré par un laser CO₂ avec une puissance supérieure à 1 kW et encore mieux supérieure à 2 kW.

25. Procédé selon l'une quelconque des revendications précédentes, **caractérisé en ce que**, dans le traitement au laser susmentionné (11), on utilise au moins deux faisceaux laser qui proviennent d'une seule source laser, dont le faisceau est divisé.

26. Procédé selon la revendication 25, **caractérisé en ce que** les deux faisceaux laser susmentionnés traitent deux côtés opposés (7A-8A ; 7B-8B) du panneau de sol.

27. Procédé selon l'une quelconque des revendications 1 à 26, **caractérisé en ce que** le traitement au laser (11) est mis en oeuvre au moins pour influencer les caractéristiques mécaniques et/ou thermiques et/ou d'autres caractéristiques d'au moins une portion de la surface (23) des panneaux de sol (1).

28. Procédé selon la revendication 27, **caractérisé en ce que** le traitement au laser (11) est mis en oeuvre au moins pour ramollir au moins de manière temporaire la matière de la couche supérieure (4) localement, par lequel, à l'état ramolli, un autre traitement est alors mis en oeuvre sur cette matière, plus particulièrement un traitement de découpage mécanique, et en particulier un traitement de découpage pour former les zones marginales profilées susmentionnées (9).

29. Panneau de sol, **caractérisé en ce qu'**il est fabriqué conformément au procédé selon l'une quelconque des revendications précédentes, le panneau de sol étant du type qui comprend une couche supérieure (4) à base d'une matière synthétique (5) et qui, au moins à deux côtés opposés (7A-8A ; 7B-8B), possède des zones marginales profilées (9) qui comprennent au moins des éléments d'accouplement (10), le panneau de sol comprenant en outre une portion de matière (22-29) éliminée de la couche supérieure (4) via un traitement au laser, et au moins une portion de la surface finale de la zone marginale profilée (9) établie au moyen dudit traitement au laser (11).
